# FASCICULE DE BREVET EUROPEEN

(11) **EP 0 554 164 B1**
(45) Date de publication et mention de la délivrance du brevet: **05.03.1997**
(21) Numéro de dépôt: 93400187.6
(22) Date de dépôt: 26.01.1993
(51) Int. Cl.: G06K 7/00, G06K 19/07

(54) **Carte à puce à plusieurs protocoles de communication**
Chipkarte mit mehreren Kommunikationsprotokollen
Chip card with multi communication protocols

(30) Priorité: 30.01.1992 FR 9201001
(43) Date de publication de la demande: 04.08.1993
(73) Titulaire: GEMPLUS CARD INTERNATIONAL, F-13420 Gemenos (FR)
(72) Inventeur: Kowalski, Jacek, F-75116 Paris (FR)
(74) Mandataire: Schmit, Christian Norbert Marie

(56) Documents cités:
- PATENT ABSTRACTS OF JAPAN vol. 13, no. 64 (P-827) 14 Février 1989 & JP-A-63 250 726
- PATENT ABSTRACTS OF JAPAN vol. 11, no. 351 (E-557) 17 Novembre 1987 & JP-A-62 130 040
- PATENT ABSTRACTS OF JAPAN vol. 12, no. 174 (E-612) 24 Mai 1988 & JP-A-62 281 642

## Description

L'invention concerne les cartes à puces, en particulier celles qui sont utilisées pour l'obtention de prestations en biens ou en services. L'exemple le plus courant est celui de la carte téléphonique prépayée qui permet d'établir des communications téléphoniques à partir de cabines publiques sans avoir recours à des jetons ou des pièces de monnaie.

Pour faciliter la description de la présente invention on se référera uniquement à ces cartes téléphoniques, mais l'invention est utilisable dans d'autres applications très différentes (cartes bancaires, etc.).

Un problème qu'on rencontre maintenant de plus en plus est la compatibilité entre des cartes à puces émises par un premier prestataire de services et celles qui sont émises par un autre prestataire, même dans le cas où les prestations délivrées sont très semblables.

Le cas des cartes téléphoniques est exemplaire à cet égard. Une carte émise par les organismes de télécommunication d'un pays sont physiquement très semblables (mêmes dimensions normalisées) à celles émises par un autre pays. La position des contacts électriques sur la carte et le nombre de ces contacts sont également fixés par la même norme internationale. Cela veut dire que la carte émise dans un pays peut physiquement être insérée dans un lecteur correspondant au système d'un autre pays. Mais pourtant elle ne fonctionnera pas dans ce lecteur car les protocoles de communication entre la carte et le lecteur ne se correspondent pas : le lecteur émet des signaux selon un protocole que la carte ne comprend pas.

Par le mot "protocole" on entend aussi bien l'organisation temporelle des signaux électriques qui transitent entre la carte et le lecteur que leur organisation spatiale, c'est-à-dire leur présence sur tel ou tel contact physique de la carte ou du lecteur.

Dans de nombreux cas, il serait préférable par exemple qu'un titulaire de carte française puisse se servir de sa carte en Allemagne s'il en a besoin malgré la différence de protocole des lecteurs des deux pays.

Pour donner une illustration plus complète de ce problème, on peut se référer aux normes qui définissent les protocoles pour différents systèmes utilisant des cartes à puces classiques à huit contacts et à mode de communication synchrone et séquentielle : en France la norme utilisée s'appelle TS1001; en Allemagne SLE4403; dans d'autres pays on trouve des normes TS1001 ou SLE4403 ou TS1301. Il s'agit de normes correspondant à des fonctionnements synchrones de la carte, c'est-à-dire pilotés par une horloge issue du lecteur de cartes. Les opérations à effectuer sont extrêmement simples : réinitialisation; lecture d'une donnée à l'adresse courante; incrémentation d'une position d'adresse; programmation ou effacement à l'adresse courante.

Si on appelle VCC, VSS, VPP, CLK, I/O, RST , FUSE et PROG les huit contacts de la carte, on s'aperçoit que les cinq premiers sont les mêmes pour toutes ces normes; ils correspondent respectivement à :
- VCC :: tension d'alimentation positive 5 volts
- VSS :: masse
- VPP :: tension de programmation (environ 15 v)
- CLK :: horloge
- I/O :: entrée/sortie de données

Mais les trois autres contacts ont des significations différentes selon les différentes normes.

Dans la norme TS1001, le contact FUSE est un contact d'activation générale; s'il est à zéro, une opération de remise à zéro est effectuée; il doit être à 1 pour des opérations de lecture, d'incrémentation d'adresse, ou de programmation dans la carte. Le contact RST définit s'il s'agit d'une opération d'incrémentation (RST = 0) ou de programmation (RST = 1) sur front montant de l'horloge CLK. La lecture se fait dans tous les cas sur front descendant de l'horloge CLK.

Dans la norme TS1301, c'est le signal RST qui définit l'activation (RST = 1) ou la réinitialisation (RST = 0); le contact PROG définit s'il doit y avoir programmation ou non. La lecture se fait sur front descendant de l'horloge CLK, l'incrémentation d'adresse sur front montant de l'horloge CLK.

Enfin, dans la norme SLE4403, le contact RST joue un double rôle : réinitialisation s'il dure assez longtemps; programmation sur front montant de l'horloge CLK s'il y a eu préalablement une courte impulsion positive sur RST, incrémentation d'adresse en l'absence d'une telle impulsion courte préalable sur RST. Lecture dans tous les cas sur front descendant de l'horloge CLK.

On comprend donc l'impossibilité de faire fonctionner une carte dans un lecteur qui lui applique des signaux différents de ce qu'elle peut comprendre.

On pourrait imaginer que le lecteur est apte à communiquer avec plusieurs types de cartes et qu'on adapte son fonctionnement à la carte qui est insérée. D'ailleurs un tel lecteur de carte pouvant communiquer avec des cartes selon plusieurs protocoles est divulgué dans la demande japonaise JP-A-63 250 726. Ce lecteur lit sur la carte une information indiquant le protocole de communication de la carte et sélectionne ce protocole, parmi plusieurs protocoles possibles, pour communiquer avec la carte. Mais en pratique l'élaboration physique des signaux produits par le lecteur à destination de la carte est faite de manière figée, soit en "hardware", (c'est-à-dire en logique câblée) soit en "firmware", c'est-à-dire sous le contrôle d'une mémoire morte. Il faudrait donc changer ou modifier les lecteurs et pas seulement leurs logiciels de fonctionnement si on devait les rendre adaptables à plusieurs sortes de cartes. Et même si le lecteur de carte incluait plusieurs circuits de protocole différents, il faudrait que l'utilisateur indique quel type de carte il va insérer.

Selon l'invention, pour permettre l'insertion de cartes dans des lecteurs fonctionnant selon des protocoles de communication différents, on propose de prévoir dans la carte :
- plusieurs circuits de conversion, chaque circuit de conversion étant apte à convertir en instructions exécutables par la carte les signaux électriques reçus du lecteur selon un protocole déterminé, les différents circuits de conversion correspondant chacun à un protocole de communication différent,
- et un circuit de sélection de protocole, comprenant un circuit de conversion auxiliaire, le circuit de conversion auxiliaire étant apte à engendrer des instructions spécifiques exécutables par la carte, ces instructions spécifiques servant à la sélection d'un des circuits de conversion et étant engendrées à partir de signaux électriques reçus du lecteur qui peuvent être engendrés dans tous les protocoles.

En pratique l'invention consiste à utiliser essentiellement ceux des contacts de la carte qui ont des significations identiques (ou très semblables) dans tous les protocoles, pour faire une sélection préalable du protocole qui sera vraiment utilisé par la suite. On met alors en service le circuit de conversion approprié, après quoi la communication se poursuit avec le protocole choisi.

Le lecteur communique avec la carte pendant la phase initiale de sélection de protocole en utilisant temporairement un protocole simplifié, exécutable par tous les types de lecteurs quel que soit leur protocole d'échange normal.

On s'arrange pour que ce protocole simplifié soit principalement constitué par une partie commune à tous les protocoles possibles, de sorte que le lecteur peut communiquer en utilisant tout simplement son propre protocole, quel qu'il soit. Cela évite que le lecteur ait à utiliser deux protocoles successifs, c'est-à-dire d'abord un protocole simplifié puis un protocole complet; et cela permet en particulier d'utiliser les lecteurs de types différents déjà installés.

Pendant la phase initiale, la carte interprète alors le protocole du lecteur comme un protocole spécial; ce protocole permet d'exécuter toutes les opérations nécessaires à la sélection d'un protocole futur d'échange. C'est le circuit de conversion auxiliaire qui exécute cette interprétation des signaux reçus du lecteur pendant la phase initiale.

Concrètement, dans l'exemple des cartes à huit contacts rappelé ci-dessus, avec cinq contacts communs (VCC, VSS, VPP, CLK, I/O), on utilisera essentiellement le contact d'horloge (CLK) pour engendrer les instructions de sélection. Le contact RST sera utilisé pour confirmer la sélection effectuée. Le contact d'entrée-sortie de données (I/O) sera utilisé pour des opérations de lecture. Les bornes d'alimentation sont utilisées aussi puisqu'elles sont communes aux différents protocoles. Les bornes PROG et FUSE au contraire ne seront pas utilisées en principe.

De préférence, dans une application de carte à mémoire simple dans laquelle les instructions exécutables par la carte concernent la mémoire et sont au nombre de cinq (initialisation, lecture, incrémentation d'adresse, programmation, effacement), on utilise une partie de la mémoire de la carte pour stocker un bit représentant le protocole qui doit être utilisé. Et on utilise donc un protocole simplifié pour inscrire dans cette mémoire le bit d'identification du protocole à utiliser.

De préférence encore, si un contact d'horloge est l'un des contacts communs aux différents protocoles, on prévoit selon l'invention d'exécuter (pour la phase de sélection de protocole) des instructions spécifiques dont la signification sera modifiée en fonction de la durée d'un créneau d'horloge apparaissant sur ce contact. Dans ce cas, il est particulièrement souhaitable de prévoir que des instructions de programmation ou effacement dans une mémoire correspondent à une durée de créneau longue et des instructions de lecture correspondent à une durée courte.

Le circuit de conversion auxiliaire est alors apte à recevoir du lecteur les signaux d'horloge, et il est connecté par ailleurs au lecteur par une entrée-sortie de donnée; il fournit de préférence au moins les instructions suivantes : effacement de l'état d'un bit en présence d'un signal d'horloge long; programmation de ce bit en présence d'un deuxième signal d'horloge long suivant immédiatement le premier sans interposition d'un signal d'horloge court entre les deux; incrémentation d'un bit d'adresse de la mémoire déclenchée par le front montant d'un signal d'horloge court.

L'instruction spécifique supplémentaire suivante peut aussi être exécutée : lecture de l'état d'un bit et transmission sur le contact d'entrée-sortie de donnée, déclenchée par le front descendant d'un signal d'horloge court.

D'autres caractéristique et avantages de l'invention apparaîtront à la lecture de la description détaillée qui suit et qui est faite en référence aux dessins annexés dans lesquels :
- la figure 1 représente le schéma général de circuit permettant la mise en oeuvre de l'invention;
- les figures 2 et 3 représentent à titre d'exemple des portions de circuit de conversion du schéma de la figure 1, avec les diagrammes temporels correspondants;
- la figure 4 représente une réalisation du circuit de conversion auxiliaire selon l'invention;
- la figure 5 représente les diagrammes temporels correspondant au schéma de la figure 4.

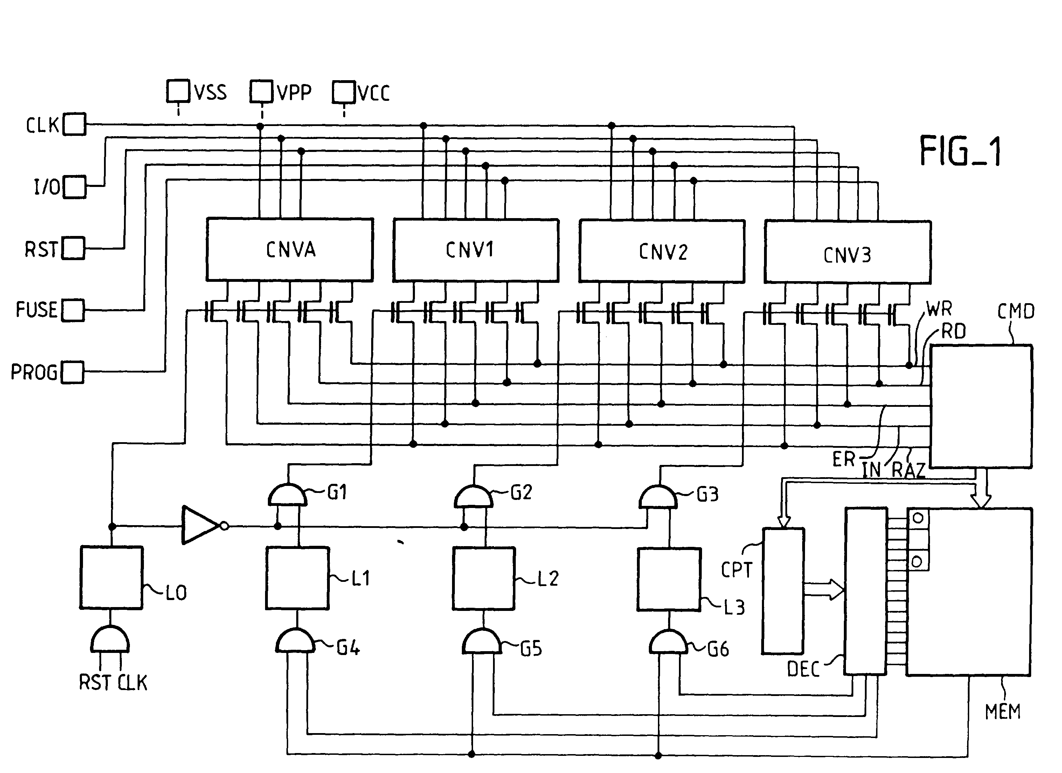

Sur la figure 1, on a représenté le schéma de circuit permettant de mettre en oeuvre la présente invention dans l'exemple d'une carte à mémoire (du type d'une carte téléphonique à prépaiement). Cette figure représente plus précisément les circuits incorporés dans la carte à puce et permettant à celle-ci d'être insérée dans des lecteurs fonctionnant selon des protocoles différents.

Dans une puce classique de carte à mémoire, on aurait les éléments suivants :
- des contacts d'accès extérieur, reliant la puce au lecteur; ces contacts sont ici au nombre de huit et désignés par VCC, VPP, VSS, CLK, I/O, RST, FUSE, PROG;
- une mémoire MEM, par exemple une mémoire EEPROM (mémoire non volatile programmable et effaçable électriquement); cette mémoire est adressable séquentiellement dans l'exemple de réalisation le plus courant, c'est-à-dire qu'un compteur d'adresse CPT, incrémenté par unité, commande un décodeur d'adresse DEC pour désigner successivement les différents mots de mémoire;
- des circuits logiques de commande de la mémoire, généralement désignés par CMD, permettant d'établir sur les lignes et les colonnes de cellules de la mémoire les tensions qui conviennent pour l'exécution des diverses opérations nécessaires au fonctionnement d'une mémoire ; ici, ces opérations sont par exemple au nombre de cinq : lecture du contenu d'une cellule à une adresse déterminée, programmation d'une cellule à cette adresse, effacement de cette cellule; incrémentation de l'adresse pour passer à une cellule suivante; réinitialisation du compteur d'adresse CPT qui définit l'adresse courante. Ces circuits CMD ne seront pas décrits; ils sont très classiques et dépendent du type de mémoire utilisée;
- un circuit de conversion apte à recevoir les signaux émis par le lecteur de carte à puce sur les contacts de la carte et apte à les transformer en instructions à destination du circuit de commande CMD pour faire exécuter à celui-ci les opérations indiquées ci-dessus en fonction de l'instruction reçue; le circuit de conversion reçoit directement les signaux du lecteur et établit les ordres nécessaires en fonction de l'organisation spatiale et temporelle de ces signaux; ces ordres sont transmis au circuit de commande CMD.

Selon l'invention, on a sur la puce les mêmes contacts d'accès, la mémoire MEM, le même circuit de commande CMD; mais on a plusieurs circuits de conversion différents CNV1, CNV2, CNV3, remplissant chacun la fonction du circuit de conversion de l'art antérieur mais chacun pour un protocole différent. Et de plus, on a sur la puce un circuit de sélection de protocole apte à sélectionner un circuit de conversion particulier et à le relier au circuit de commande CMD.

Le circuit de sélection de protocole est destiné à effectuer cette sélection à partir d'un ordre reçu du lecteur. En effet, en pratique le lecteur va commencer un dialogue avec la carte à mémoire en lui indiquant avec quel protocole il fonctionne, de manière que la carte s'adapte à ce protocole.

La difficulté réside dans le fait que la carte doit comprendre les instructions du lecteur alors qu'elle ne sait pas encore quel est le protocole.

C'est pourquoi, selon une caractéristique de l'invention, le circuit de sélection de protocole comporte principalement un circuit de conversion auxiliaire, CNVA, apte à communiquer temporairement avec le lecteur selon un mode de dialogue sommaire permettant simplement de déterminer quel protocole devra être utilisé par la suite pour continuer l'échange de données.

Le circuit de conversion auxiliaire a la particularité suivante : il réagit essentiellement en fonction de signaux qui peuvent être très facilement engendrés dans tous les protocoles susceptibles d'être utilisés.

Dans le cas présent, le circuit de conversion auxiliaire CNVA reçoit les tensions d'alimentation présentes sur les bornes VPP, VCC, VSS; il reçoit également les signaux d'horloge issus du lecteur, apparaissant sur la borne CLK; il reçoit le signal présent sur la borne RST; et enfin il est connecté à la borne d'entrée/sortie I/O, principalement pour transmettre des informations au lecteur. Dans l'exemple qui est décrit ici, on considère en effet que ces cinq bornes reçoivent des signaux de même nature dans tous les protocoles et permettent d'établir temporairement un protocole simplifié qui ne sert que pendant la phase de sélection de protocole.

Le circuit de conversion auxiliaire va donc établir un petit nombre de signaux de contrôle à destination du circuit de commande CMD, mais seulement pendant une phase initiale lors de l'introduction de la carte dans le lecteur.

Plusieurs possibilités de réalisation existent. Dans une première possibilité, on peut prévoir que le circuit de sélection de protocole désigne le protocole à utiliser pendant l'opération en cours, sans enregistrer de manière permanente dans la carte une identification de protocole à utiliser dans le futur. Cette solution serait la plus simple.

On préfère cependant une solution dans laquelle l'identification du protocole à utiliser est enregistrée de manière non volatile dans la carte et subsiste tant que la carte n'est pas introduite dans un lecteur ayant un protocole différent. Lorsque la carte est introduite dans un lecteur de type différent, l'information relative au protocole est modifiée de manière non volatile. C'est ce cas qui va être décrit plus précisément dans la suite.

On utilise de préférence selon l'invention, dans le cas d'une carte à mémoire, les premières adresses de la mémoire pour enregistrer un mot représentant le protocole à utiliser.

Dans un exemple illustratif simple, on considérera que les mots de mémoire comprennent chacun un bit et que les adresses successives de la mémoire désignent des cellules binaires successives. Les trois premières cellules de la mémoire servent à désigner le protocole à utiliser. Par exemple, si le protocole N°1 doit être utilisé, un bit 1 devra être stocké dans la première adresse, les deux autres étant à zéro; si c'est le deuxième protocole qui doit être utilisé, un bit 1 sera inscrit dans la deuxième cellule, les deux autres à zéro; et enfin, si c'est le troisième protocole, c'est le bit de la troisième adresse qui devra être à 1, les premier et deuxième étant à zéro.

L'état des trois premières cellules de la mémoire est utilisé pour définir l'état de trois bascules bistables L1, L2, L3 qui commandent chacune la mise en service ou hors service d'un circuit de conversion respectif CNV1, CNV2, CNV3. En fonctionnement normal, une seule de ces trois bascules est dans un état qui met en service un circuit de conversion. Un seul protocole à la fois peut donc fonctionner.

De plus, une bascule bistable supplémentaire L0 permet de mettre hors service les trois circuits de conversion CNV1, CNV2, CNV3, tout en mettant en service le circuit de conversion auxiliaire CNVA.

Le contrôle des circuits de conversion par les bascules est représenté sur la figure d'une manière symbolique par des transistors qui sont commandés par une bascule et qui relient les sorties d'un circuit de conversion respectif au circuit de commande CMD. L'interdiction de mise en service des circuits de conversion CNV1, CNV2, CNV3 par la bascule L0 est symbolisée par des portes logiques ET, G1 à G3, placées chacune entre une bascule L1 à L3 et un circuit de conversion respectif CNV1 à CNV3. Ces portes ET ont toutes une entrée contrôlée par la bascule L0 et une entrée reliée à la sortie d'une bascule L1 à L3.

Le positionnement des bascules L1 à L3 en fonction du contenu de la mémoire MEM se fait par l'intermédiaire de portes G4 à G6 qui permettent de transmettre à chaque bascule l'état d'un bit respectif parmi les trois premiers bits de la mémoire. Ces portes sont ouvertes par des lignes de sortie du décodeur DEC (correspondant aux trois premières positions de la mémoire). Elles laissent passer vers les bascules l'état lu sur une ligne de sortie de la mémoire.

Le circuit de conversion auxiliaire CNVA, les bascules L0 à L3, les portes logiques qui leur sont associées, forment l'ensemble du circuit de sélection de protocole.

La procédure de mise en service d'un circuit de conversion déterminé se déroule de la manière indiquée ci-dessous.

Lors de la mise sous tension de la puce, il y a initialisation à zéro du compteur d'adresse CPT qui permet alors la désignation de la première cellule de mémoire (par l'intermédiaire du décodeur DEC). Parallèlement, au moment de la mise sous tension, la bascule bistable L0 est positionnée dans un état où elle met en service le circuit de conversion auxiliaire CNVA et où elle met hors service tous les autres circuits de conversion.

Les opérations suivantes sont alors exécutées, sous la commande du circuit de conversion auxiliaire CNVA.

On lit les trois premiers bits de la mémoire, par une succession d'opérations de lecture suivies à chaque fois d'une incrémentation du compteur d'adresse.

Pendant ces étapes de lecture, les bascules L1, L2, L3 prennent l'état correspondant au bit stocké dans la cellule de mémoire respective qui leur correspond (la bascule L1 prend l'état de la première cellule, la bascule L2 l'état de la deuxième cellule, etc.).

Une seule des bascules sera donc placée dans un état qui autorise la mise en service de l'un des circuits de conversion. Par exemple, la bascule L2 autorise la mise en service du circuit CNV2.

Si cela correspond au protocole souhaité (celui du lecteur), le lecteur envoie un signal qui fait basculer la bascule L0, inhibant le fonctionnement du circuit de conversion auxiliaire CNVA et mettant en service le circuit de conversion CNV2 autorisé par la bascule L2. Le signal qui fait basculer la bascule L0 est de préférence la combinaison d'un signal d'horloge CLK au niveau logique 1 et du signal RST au niveau 1. Une porte ET recevant ces deux signaux permet d'établir cette commande de basculement de L0.

On notera ici que les logiciels qui pilotent le fonctionnement des lecteurs devront être conçus pour permettre cette opération. En pratique, si c'est un lecteur selon la norme SLE4403 ou TS1301 il suffira d'envoyer une instruction "RESET" puisque cette instruction fournit cette combinaison RST=1, CLK =1. Mais dans le cas d'un lecteur selon la norme TS1001, le lecteur devra envoyer une instruction de programmation pour obtenir effectivement la combinaison RST=1 et CLK=1 qui fera basculer la bascule L0. Les logiciels utilisés dans les lecteurs pour cette phase de sélection de protocole devront donc tenir compte de cette nécessité.

Si au contraire l'information de protocole stockée dans les trois premiers bits de la mémoire n'est pas bonne, il est nécessaire de la changer; on procède alors de la manière indiquée ci-après. On notera que les étapes de lecture qui précèdent ne sont pas absolument obligatoires car on pourrait écrire une information de protocole dans la mémoire sans lire au préalable celle qui y est inscrite.

On devra effacer les trois premiers bits de la mémoire pour ne programmer que celui qui correspond au protocole sélectionné. Pour cela on utilisera comme instruction d'effacement puis de programmation la présence d'un signal d'horloge long, par exemple supérieur à 1 milliseconde environ, sur la borne CLK, la borne RST restant à 0. La présence d'un signal d'horloge long sera interprétée comme un ordre d'effacement; la présence de deux signaux d'horloge longs successifs, c'est-à-dire non séparés par une opération de lecture (signal d'horloge court), sera interprétée comme un ordre d'effacement suivi d'un ordre de programmation.

On pourra donc exécuter le protocole suivant en admettant par exemple que le troisième bit doive être programmé : le lecteur se positionne sur un premier bit; l'efface; puis sur le deuxième bit; l'efface; puis sur le troisième bit; l'efface et le programme grâce à deux signaux d'horloge longs non séparés par un signal d'horloge court.

Pendant ce temps, le signal RST reste à 0.

Suite à la programmation de la cellule correspondant au protocole désiré, par exemple la troisième cellule de la mémoire, la bascule correspondant à cette cellule (L3) va être positionnée dans un état où elle autorise la mise en service d'un circuit de conversion déterminé (ici CNV3).

Enfin, on envoie simultanément un signal de réinitialisation sur la borne RST et un signal d'horloge court sur la borne CLK, ce qui fait basculer la bascule L0; celle-ci cesse d'inhiber le circuit de conversion sélectionné, et de plus elle interdit le fonctionnement du circuit auxiliaire CNVA.

Le lecteur peut alors échanger normalement des données avec la carte selon son propre protocole qu'il a imposé à la carte. Le numéro du protocole reste enregistré dans la mémoire non volatile pour les usages ultérieurs de la carte avec le même type de lecteur et jusqu'à ce que la carte soit insérée dans un type de lecteur différent.

Ainsi, on a utilisé temporairement, pour une sélection du protocole, les signaux présents sur les bornes VCC, VPP, VSS (bornes d'alimentation), la borne d'horloge CLK, et la borne RST, avec en outre la borne I/O pour les opérations de lecture.

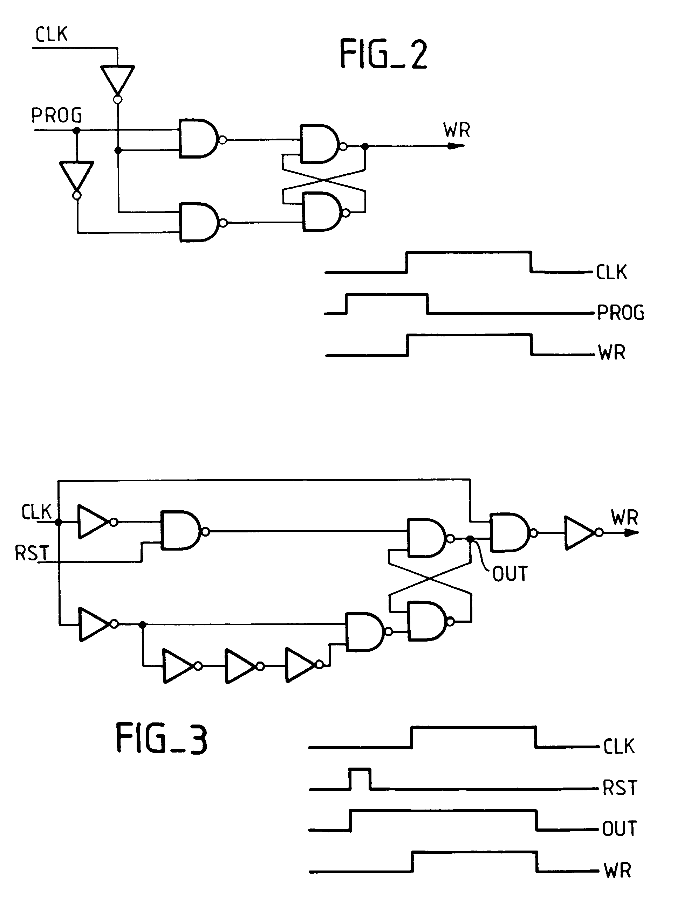

Pour illustrer la signification des circuits de conversion tels que CNV1, CNV2, CNV3, on a représenté sur la figure 2 la portion de circuit qui établit un ordre d'écriture WR à destination du circuit de commande CMD dans un protocole correspondant à la norme TS1301. Les diagrammes temporels correspondants sont également représentés. L'ordre d'écriture apparaît pendant la durée d'un signal d'horloge sur la borne CLK à condition que le signal présent sur la borne PROG soit à l'état 1 au moment du front montant d'horloge. L'ordre WR permet l'écriture ou l'effacement selon l'état de l'entrée I/O.

A titre d'exemple encore, sur la figure 3 on a représenté la portion de circuit de conversion correspondante pour le protocole SLE4403, avec les diagrammes temporels correspondants. L'ordre d'écriture WR (programmation ou effacement selon l'état de I/O) apparaît pendant la durée du créneau d'horloge sur la borne CLK, à condition que ce créneau ait été précédé par une impulsion brève sur la borne RST.

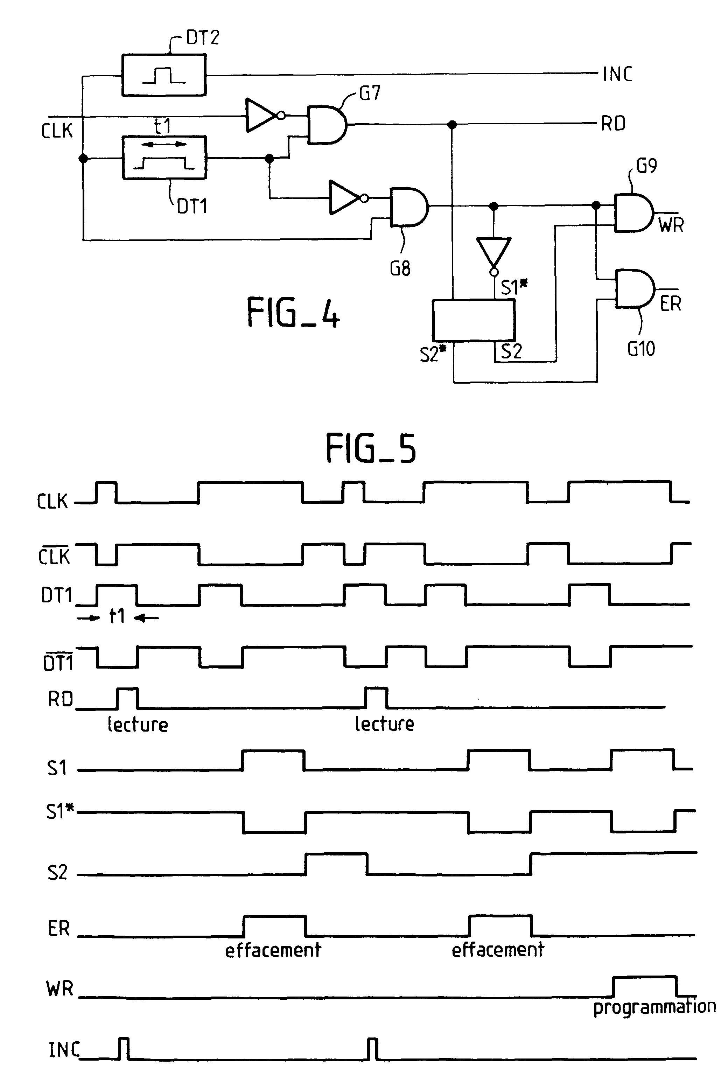

La figure 4 représente les portions principales du circuit de conversion auxiliaire selon l'invention, permettant d'établir les signaux de lecture, écriture et effacement à partir des signaux apparaissant sur la borne CLK, qui peuvent être produits à partir de lecteurs fonctionnant selon n'importe lequel des trois protocoles TS1001, TS1301 ou SLE4403.

Le protocole simplifié qui est utilisé est le suivant : si le signal d'horloge est un créneau court, il détermine une opération d'incrémentation sur le front montant du créneau et une opération de lecture sur le front descendant; si le signal d'horloge est un créneau long, il détermine une opération d'écriture; l'écriture est un effacement s'il n'y a qu'un seul créneau long; c'est une programmation s'il y en a deux successifs.

Pour cela, le circuit de conversion auxiliaire peut être constitué de la manière représentée à la figure 4. Une bascule monostable DT1 est reliée à la borne CLK et établit un créneau de durée t1 à partir du front montant de l'horloge CLK. Une porte ET G7 reçoit la sortie de la bascule DT1 et la sortie inversée de l'horloge CLK. La porte ET G7 établit un ordre de lecture RD seulement si la durée du signal d'horloge est plus courte que t1 (ordre de lecture seulement pour des créneaux de durée courte).

Une porte ET G8 reçoit le signal sur CLK et la sortie inversée de la bascule DT1. Elle établit un signal S1 qui est un ordre d'écriture si l'horloge est de durée plus longue que t1.

L'ordre d'écriture S1 est transformé en un ordre d'effacement ER ou un ordre de programmation WR de la manière suivante : une bascule RS B1 reçoit le complément logique S1∗ du signal S1 sur une première entrée, et le signal de lecture RD sur une deuxième entrée. Sa sortie S2 passe à 1 lors d'un front montant de S1∗, c'est-à-dire lors d'un front descendant de S1, c'est-à-dire encore à la fin d'un créneau d'horloge long, et elle y reste tant qu'elle n'est pas rappelée à 0 par un front montant du signal de lecture RD.

Cette sortie S2 autorise l'ouverture d'une porte ET G9 qui peut laisser passer le signal S1; le complément logique S2∗ de S2 autorise au contraire l'ouverture d'une porte ET G10 qui peut également laisser passer le signal S1. La sortie de la porte G9 peut servir à constituer un signal de programmation WR, tandis que la sortie de la porte G10 peut servir à constituer un signal d'effacement ER. Les durées de ces signaux sont sensiblement égales à la durée du créneau long sur CLK à laquelle il faut retrancher la durée t1 de la bascule monostable DT1.

Le fonctionnement est le suivant : tant que les créneaux d'horloge sont des créneaux courts, la sortie S2 de la bascule RS B2 reste à zéro; la porte G10 est ouverte mais il n'y a aucun signal S1 à laisser passer. Lorsqu'un créneau long apparaît, un signal S1 est engendré et passe par la porte G10 toujours ouverte. Une opération d'effacement est effectuée. A la fin du créneau d'horloge long sur CLK, la bascule RS change d'état; sa sortie S2 ouvre la porte G9.

Deux possibilités peuvent se présenter alors. Ou bien un nouveau créneau d'horloge long est émis. Un signal S1 est à nouveau engendré. Mais cette fois ce signal va passer par la porte G9 ouverte, engendrant donc une opération de programmation WR. Ou alors un créneau d'horloge court est émis (opération de lecture); ce créneau remet la bascule RS dans l'état initial (sortie S2 à zéro) de sorte que la prochaine opération d'écriture ne pourra être qu'un effacement.

Enfin, une autre bascule monostable DT2 reçoit le signal présent sur la borne d'horloge CLK et fournit un créneau à partir du front montant du créneau d'horloge. La sortie de cette bascule constitue un signal INC qui commande l'incrémentation du compteur d'adresse CPT. Toutefois, ce signal ne doit pas apparaître entre deux créneaux longs successifs puisque l'opération d'effacement et de programmation portent sur le même bit. Des moyens logiques supplémentaires, non représentés pour ne pas alourdir la figure, sont utilisés pour supprimer les ordres d'incrémentation INC pour les signaux d'horloge longs représentant une programmation à la suite d'un effacement.

## Revendications

1. Carte à puce apte à communiquer avec un lecteur de cartes selon plusieurs protocoles de communication différents, caractérisée en ce qu'elle comporte :
- plusieurs circuits de conversion (CNV1, CNV2, CNV3), chaque circuit de conversion étant apte à convertir en instructions exécutables par la carte les signaux électriques reçus du lecteur selon un protocole déterminé, les différents circuits de conversion correspondant chacun à un protocole de communication différent,
- et un circuit de sélection de protocole (CNVA, L0, L1, L2, L3, G1 à G6), comprenant un circuit de conversion auxiliaire (CNVA), le circuit de conversion auxiliaire étant apte à engendrer des instructions spécifiques exécutables par la carte, ces instructions spécifiques servant à la sélection d'un des circuits de conversion et étant engendrées à partir de signaux électriques reçus du lecteur qui peuvent être engendrés dans tous les protocoles.

2. Carte selon la revendication 1, comprenant entre cinq et huit contacts parmi lesquels un contact d'horloge CLK, un contact d'entrée-sortie de données I/O et un troisième contact RST, caractérisée en ce que le circuit de conversion auxiliaire (CNVA) utilise essentiellement les signaux présents sur les contacts CLK et RST pour élaborer des instructions de sélection de protocole.

3. Carte selon la revendication 2, caractérisée en ce que le circuit de conversion auxiliaire fournit des instructions différentes (WR, ER; RD) selon la durée d'un créneau apparaissant sur le contact d'horloge CLK.

4. Carte selon l'une des revendications 2 et 3, caractérisée en ce qu'elle comporte une mémoire (MEM) susceptible d'être commandée par des instructions de lecture, écriture, incrémentation ou réinitialisation, en ce que la mémoire est utilisée pour enregistrer, dans une phase de sélection de protocole, une identification de protocole à utiliser, et en ce que l'identification enregistrée sert dans une phase ultérieure à sélectionner un des circuits de conversion, correspondant au protocole identifié.

5. Carte selon la revendication 4, caractérisée en ce que le circuit de conversion auxiliaire est apte à fournir des instructions de programmation, effacement, et incrémentation à partir de signaux présents sur les bornes CLK et RST.

6. Carte selon la revendication 5, caractérisée en ce qu'une instruction d'effacement est définie par la présence d'un signal d'horloge long et une instruction de programmation est définie par la présence d'un deuxième signal d'horloge long suivant immédiatement le premier sans interposition de signal d'horloge court entre les deux.

## Patentansprüche

1. Chipkarte, die sich zum Kommunizieren mit einem Kartenleser gemäß mehreren unterschiedlichen Protokollen zur Kommunikation eignet, dadurch gekennzeichnet, daß sie umfaßt:
- mehrere Wandlerschaltkreise (CNV1, CNV2, CNV3), wobei sich jeder Wandlerschaltkreis dazu eignet, die von der Karte vom Leser empfangenen elektrischen Signale gemäß einem festgelegten Protokoll in ausführbare Befehle umzuwandeln, wobei die unterschiedlichen Wandlerschaltkreise jeweils einem unterschiedlichen Kommunikationsprotokoll entsprechen,
- und einen Protokollwahlschaltkreis (CNVA, L0, L1, L2, L3, G1 bis G6), der einen Hilfswandlerschaltkreis (CNVA) umfaßt, wobei der Hilfswandlerschaltkreis sich zum Erzeugen von speziellen von der Karte ausführbaren Befehlen eignet, wobei die speziellen Befehle zur Auswahl eines der Wandlerschaltkreise dienen und ausgehend von den vom Leser empfangenen elektrischen Signalen erzeugt wurden, die in allen Protokollen erzeugt sein können.

2. Karte nach Anspruch 1, die zwischen fünf und acht Kontakten umfaßt, unter denen sich ein Taktgeberkontakt CLK, ein Daten-Eingangs/Ausgangskontakt I/O und ein dritter Kontakt RST befinden, dadurch gekennzeichnet, daß der Hilfswandlerschaltkreis (CNVA) im wesentlichen die Signale verwendet, die an den Kontakten CLK und RST anliegen, um die Befehle zur Auswahl des Protokolls zu erarbeiten.

3. Karte nach Anspruch 2, dadurch gekennzeichnet, daß der Hilfswandlerschaltkreis unterschiedliche Befehle (WR, ER; RD) gemäß der Dauer eines Rechteckimpulses ausgibt, der am Taktgeberkontakt CLK anliegt.

4. Karte nach einem der Ansprüche 2 und 3, dadurch gekennzeichnet, daß sie einen Speicher (MEM) umfaßt, der durch Befehle zum Lesen, Schreiben, Inkrementieren oder Reinitialisieren steuerbar ist, daß der Speicher verwendet wird, um in einer Protokollauswahlphase eine Identifizierung des zu benutzenden Protokolls zu registrieren, und daß die registrierte Identifizierung in einer späteren Phase dazu dient, einen der Wandlerschaltkreise auszuwählen, der dem identifizierten Protokoll entspricht.

5. Karte nach Anspruch 4, dadurch gekennzeichnet, daß der Hilfswandlerschaltkreis geeignet ist, Befehle zum Programmieren, zum Löschen und Inkrementieren auszugeben, wenn Signale an den Klemmen CLK und RST anliegen.

6. Karte nach Anspruch 5, dadurch gekennzeichnet, daß ein Befehl zum Löschen definiert wird durch Anliegen eines langen Taktsignals und ein Befehl zur Programmierung definiert wird durch Anliegen eines zweiten langen Taktsignals unmittelbar nach dem ersten ohne Zwischenschaltung eines kurzen Taktsignals zwischen den beiden.

## Claims

1. Chip card capable of communicating with a card reader using several different communication protocols, characterised in that it has :
- several conversion circuits (CNV1, CNV2, CNV3), each conversion circuit being capable of converting into instructions that can be executed by the card electric signals received from the reader in compliance with a given protocol, each of the different conversion circuits corresponding to a different communication protocol,
- and a protocol selection circuit (CNVA, LO, L1, L2, L3, G1 to G6), having an auxiliary conversion circuit (CNVA), the conversion circuit being capable of generating specific instructions that can be executed by the card, these specific instructions being used to select one of the conversion circuits and being generated from electric signals received by the reader which can be generated in all the protocols.

2. Card as claimed in claim 1, having between five and eight contacts, amongst which are a clock contact CLK, a data input-output contact I/O and a third contact RST, characterised in that the auxiliary conversion circuit (CNVA) essentially uses the signals present on the contacts CLK and RST to work out protocol selection instructions.

3. Card as claimed in claim 2, characterised in that the auxiliary conversion circuit supplies different instructions (WR, ER; RD) on the basis of the duration of a time slot appearing on the clock contact CLK.

4. Card as claimed in one of claims 2 and 3, characterised in that it has a memory (MEM) that can be controlled by reading, writing, incrementing or reinitialising instructions, the memory is used to record, during a protocol selection phase, an identified protocol to be used, and the identification stored is used in a later phase for selecting one of the conversion circuits corresponding to the protocol identified.

5. Card as claimed in claim 4, characterised in that the auxiliary conversion circuit is capable of supplying programming, erasing and incrementing instructions on the basis of the signals present on the terminals CLK and RST.

6. Card as claimed in claim 5, characterised in that an erase instruction is defined by the presence of a long clock signal and a programming instruction is defined by the presence of a second long clock signal immediately following the first with no short clock signal intervening between the two.
